(19) Europäisches Patentamt
European Patent Office
Office européen des brevets

(11) **EP 4 020 102 A1**

(12) **EUROPEAN PATENT APPLICATION**

(43) Date of publication:
**29.06.2022 Bulletin 2022/26**

(21) Application number: **20217400.9**

(22) Date of filing: **28.12.2020**

(51) International Patent Classification (IPC):
***G05B 17/02*** *(2006.01)*

(52) Cooperative Patent Classification (CPC):
**G05B 17/02**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ABB Schweiz AG
5400 Baden (CH)**

(72) Inventors:
• **Munusamy, Sudhakar
560048 Bengaluru (IN)**
• **Nallasivam, Ulaganathan
560078 Bangalore (IN)**
• **Kubal, Nandkishor
411033 Pune (IN)**

(74) Representative: **Zimmermann & Partner
Patentanwälte mbB
Postfach 330 920
80069 München (DE)**

(54) **SYSTEM AND METHOD FOR OPERATING AN INDUSTRIAL PROCESS**

(57) The present invention relates to method of operating an industrial process (101) at desired operating condition. The method includes obtaining plurality of input values (301) and corresponding plurality of output values (302) associated with one or more input parameters and one or more output parameters, respectively. Further, the method includes identifying a pre-existing linear model from one or more pre-existing linear models (106) or increasing a range of operation values (305) associated with the pre-existing linear model or adapting a current pre-existing linear model (306) from the one or more pre-existing linear models (106) or determining one or more new linear models (107) for the plurality of input values (301). Furthermore, the method includes providing the one or more pre-existing linear models (106) and the one or more new linear models (107) to a control unit (103) for operating the industrial process (101) at the desired operating condition, in real-time.

FIGURE 2

EP 4 020 102 A1

## Description

**Technical Field**

The current invention relates in general to modeling behavior of an industrial process and more particularly for operating the industrial process at a desired operating point based on the modeled behavior.

**Background**

Generally, an industrial process is associated with chemicals, polymers, natural gas processing, pharmaceuticals, microelectronics, pulp, and paper industries. The industrial process comprises a non-linear behavior between input and output parameters associated with the industrial process. The industrial process is operated or controlled using a Model Predictive Control (MPC) technique to maintain the process at a desired operating point. The desired operating point is indicative of optimal values for the input and output parameters required to maintain the product quality of the industrial process. The existing solutions model the non-linear behavior of the industrial process using at least one of a first principle modeling technique based on the physics and the nature of the industrial process, a grey box modeling technique where a predetermined model structure is used to estimate the unknown model parameters from the input and output parameters and a black-box based modeling technique using recurrent neural networks.

The existing solutions for modeling the non-linear behavior of the industrial process are not accurate and not reliable due to lack of a complete understanding of the industrial process and the effect of the disturbances (such as noise, variations due to ageing, and the like) in the input parameters on the industrial process. Further, the model which exhibits non-linear behavior [termed as non-linear model] is complex, cannot be easily interpreted, and computationally expensive. Moreover, non-linear model predictive control techniques solve a suitably formulated optimization problem to control the one or more parameters of the industrial process. Further, it is well known to those skilled in the art, that the optimization problem is to be solved in real-time at every control execution interval. In addition, the solution of the optimization problem can become infeasible or non-optimal.

The typical MPC techniques operate the industrial process by assuming a linear behavior between input and output parameters associated with the industrial process. Therefore, there is a need for a generalized technique to model the non-linear behavior of the various industrial process using one or more linear models. Further, there is a need to solve the MPC optimizations problems typically formulated as a linear problem in real-time with minimal computations to determine the global optimal solution within the given time limit.

In view of the above, there is a need to address at least one of the abovementioned limitations and propose a method and system to overcome the abovementioned problems.

**Summary of the Invention**

In an embodiment, the present invention relates to a method of operating an industrial process at a desired operating condition. Where the industrial process includes one or more input parameters having a non-linear and a time-varying relationship with corresponding one or more output parameters. The one or more input parameters and the corresponding one or more output parameters are associated with one or more process equipment's of the industrial process. The method comprises obtaining a plurality of input values and a corresponding plurality of output values associated with the one or more input parameters and the one or more output parameters respectively. Further, the method comprises performing for one or more input values from the plurality of input values, at least one of identifying a pre-existing linear model from one or more pre-existing linear models based on a decision tree such that the pre-existing linear model is capable of determining that one or more predicted output values for the one or more input values is within a predefined error value. Furthermore, the method comprises increasing a range of operation values associated with the pre-existing linear model to encompass the one or more input values from the plurality of input values, when the one or more predicted output values for the one or more input values determined by the pre-existing linear model to be within the predefined error value. Thereafter, the method comprises determining one or more new linear models based on a linear regression technique, when each of the one or more pre-existing linear models fail to determine that the one or more predicted output values for the one or more input values are within the predefined error value and the one or more input values are outside the range of operation. Subsequently, the method comprises adapting a current pre-existing linear model from the one or more pre-existing linear models used to determine the one or more predicted output values using the plurality of input values based on the linear regression technique, when the current pre-existing linear model fails to determine that the one or more predicted output values for the one or more input values are within the predefined error value and each of the one or more input values are inside the range of operation. Finally, the method comprises providing at least one of the one or more pre-existing linear models and the one or more new linear models to a control unit associated with the industrial process, wherein the control unit operates the industrial process at the desired operating condition using the at least one of the one or more pre-existing linear models and the one or more new linear models.

In an embodiment, the present invention discloses a computing system for operating an industrial process at a desired operating condition. Where the industrial process includes one or more input parameters having a non-linear and a time-varying relationship with corresponding one or more output parameters. The one or more input parameters and the corresponding one or more output parameters are associated with one or more process equipment's of the industrial process. The computing system comprises at least one processor; and a memory. Where the memory is communicatively coupled to at least one processor, and the memory stores the at least one processor instructions, which, on execution, causes at least one processor to obtain a plurality of input values and the corresponding plurality of output values associated with the one or more input parameters and the one or more output parameters respectively. Further, the instructions cause the processor to perform, for one or more input values from the plurality of input values, at least one of identifying a pre-existing linear model from one or more pre-existing linear models based on a decision tree such that the pre-existing linear model is capable of determining that one or more predicted output values for the one or more input values is within a predefined error value. Furthermore, the instructions cause at least one processor to perform increasing a range of operation values associated with the pre-existing linear model to encompass the one or more input values from the plurality of input values, when the one or more predicted output values for the one or more input values determined by the pre-existing linear model to be within the predefined error value. Thereafter, the instructions cause at least one processor to perform determining one or more new linear models based on a linear regression technique, when each of the one or more pre-existing linear models fail to determine that the one or more predicted output values for the one or more input values are within the predefined error value and the one or more input values are outside the range of operation. Subsequently, the instructions cause at least one processor to perform adapting a current pre-existing linear model from the one or more pre-existing linear models used to determine the one or more predicted output values using the plurality of input values based on the linear regression technique, when the current pre-existing linear model fails to determine that the one or more predicted output values for the one or more input values is within the predefined error value and the one or more input values are inside the range of operation. Finally, the instructions cause at least one processor to provide at least one of the one or more pre-existing linear models and the one or more new linear models to a control unit associated with the industrial process, wherein the control unit operates the industrial process at the desired operating condition using the at least one of the one or more pre-existing linear models and the one or more new linear models.

Systems of varying scope are described herein. In addition to the aspects and advantages described in this summary, further aspects and advantages will become apparent by reference to the drawings and with reference to the detailed description that follows.

**Brief Description of the Drawings**

The subject matter of the invention will be explained in more detail in the following text with reference to preferred exemplary embodiments which are illustrated in the drawings, in which:

Figure 1A shows an exemplary environment for operating an industrial process at a desired operating condition, in accordance with an embodiment of the present disclosure;

Figure 1B shows an exemplary environment for maintaining a desired temperature in a data center, in accordance with an embodiment of the present disclosure;

Figure 1C shows an exemplary relationship between one or more input parameters and one or more output parameters for a data center, in accordance with an embodiment of the present disclosure;

Figure 1D shows an exemplary one or more pre-existing linear models and one or more new linear models determined by a computing unit for operating a data center, in accordance with an embodiment of the present disclosure;

Figure 2 shows an exemplary flow chart for operating an industrial process at a desired operating condition, in accordance with an embodiment of the present disclosure;

Figure 3A shows an exemplary plurality of input values and the plurality of output values obtained by the computing system, in accordance with an embodiment of the present disclosure;

Figure 3B shows an exemplary one or more pre-existing linear models and the corresponding decision tree for the industrial process, in accordance with an embodiment of the present disclosure;

Figure 3C shows an exemplary one or more pre-existing linear models corresponding to one or more input values received at the previous instant in time, in accordance with an embodiment of the present disclosure;

Figure 3D shows an exemplary one or more pre-existing linear models identified for the one or more input values within the range of operation values associated with the one or more pre-existing linear models, when the prediction error value is lesser than the predefined error value, in accordance with an embodiment of the present disclosure;

Figure 3E shows an exemplary one or more pre-existing linear models and the associated range of operation values, in accordance with an embodiment of the present disclosure;

Figure 3F shows an exemplary one or more pre-existing linear models with an increased range of operation values for the one or more input values when the prediction error value is lesser than the predefined error value, in accordance with an embodiment of the present disclosure;

Figure 3G shows an exemplary current pre-existing model identified for the plurality of input values obtained at the previous time instants, in accordance with an embodiment of the present disclosure;

Figure 3H shows an exemplary adaptation of the current pre-existing model using the one or more input values obtained at the current time instant, in accordance with an embodiment of the present disclosure;

Figure 3I shows an exemplary one or more new linear models determined for one or more input values, in accordance with an embodiment of the present disclosure; and

Figure 3J shows an exemplary one or more pre-existing linear models, one or more new linear models and the corresponding decision tree provided to a control unit, in accordance with an embodiment of the present disclosure.

**Detailed Description:**

The present invention discloses a system and method for operating an industrial process at a desired operating condition.

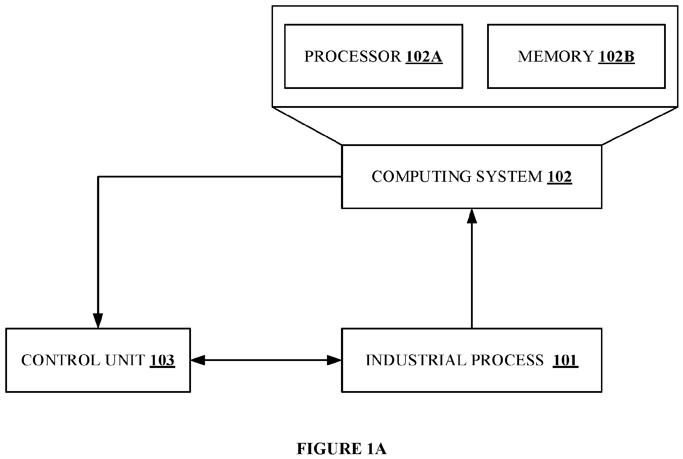

**Figure 1A** shows an exemplary environment for operating an industrial process (101) at a desired operating condition. The industrial process (101) may include procedures related to chemical, physical, electrical, or mechanical operations to manufacture or monitor products produced in the industrial plant. The chemical operations, for example, may include electrolysis, smelting, calcination, and the like. The electrical operations, for example, may include photolithography, electric arc furnace, air conditioning, and the like. The physical operations, for example, may include forging, soldering, distillation, and the like. The mechanical operations, for example, may include casting, compression molding, sintering, and the like. The person skilled in the art appreciates various industrial process (101) operations in the industrial plant apart from the above said examples and the examples provided above should not be considered as a limitation to the industrial process (101). Further, the industrial process (101) includes one or more input parameters having a non-linear and a time-varying relationship with corresponding one or more output parameters. The one or more input parameters and the corresponding one or more output parameters are associated with one or more process equipment's of the industrial process (101). For example, the one or more process equipment's may include pumps, valves, mixers, filters, coolers, heat exchangers, storage units, and the like. The person skilled in the art appreciates the presence of additional components in the industrial process (101) in addition to the above said one or more process equipment's. Further, the above said one or more process equipment's should not be considered as a limitation rather should be considered as examples for providing clarity in understanding the invention. Further one or more sensors such as a temperature sensor, a pressure sensor, a transducer, a flowmeter and the like may be used to measure a plurality of input values and a corresponding plurality of output values associated with the one or more input parameters and the one or more output parameters respectively, from the one or more process equipment's in the industrial process (101).

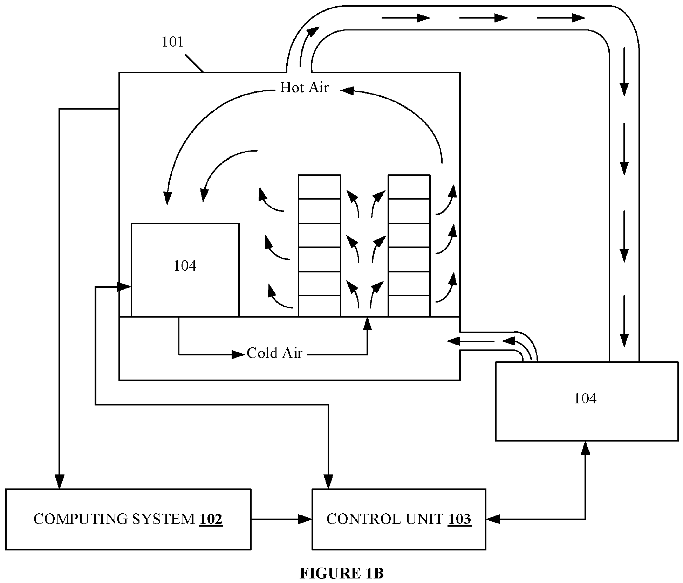

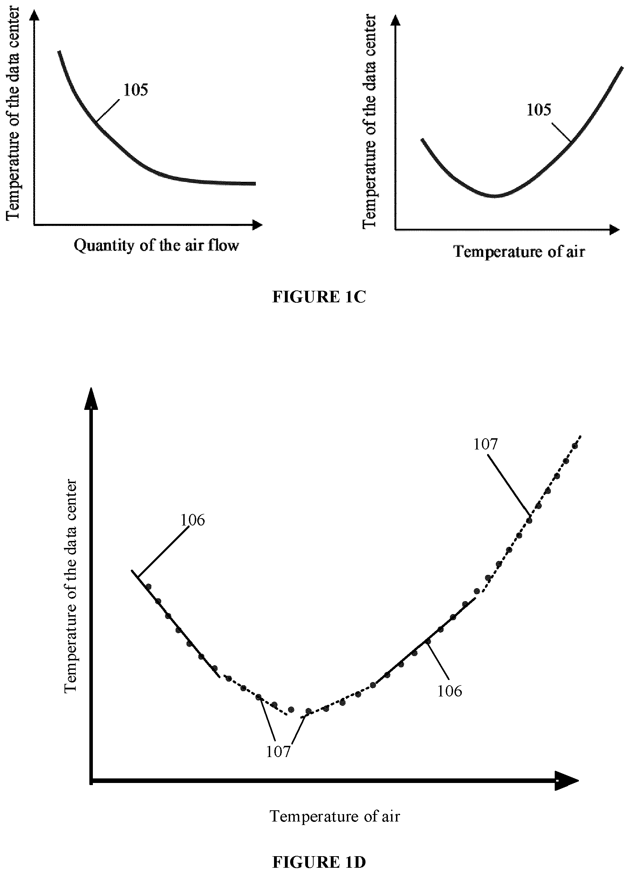

In a first example, consider an industrial process (101) such as a data center as shown in **FIGURE 1B.** The data center may include one or more process equipment's such as a plurality of servers, databases stored in the racks. Further, the data center may include one or more process equipment's such as one or more air conditioning units (104) for removing the hot air in the data center and providing the cold air to the data center. The air conditioning units (104) prevents overheating of the one or more process equipment's in the data center. The one or more output parameters for the industrial process (101) such as data center may be a temperature of the data center measured using a temperature sensor from one or more locations in the data center, a humidity measured using a humidity sensor from one or more locations in the data center and the like. The one or more input parameters for the industrial process (101) such as the data center may be the quantity of airflow, the temperature of the air provided by the air conditioning units (104), and the like. Furthermore, the one or more input parameters such as the quantity of airflow and the temperature of the air may have a non-linear and time-varying relationship (i.e. non-linear behavior (105)) with the corresponding one or more output parameters such as the temperature of the data center as shown in **FIGURE 1C.**

In an embodiment, to maintain the quality of the products or for an efficient operation of the industrial plant, the industrial process (101) should be operated at the desired operating point. The desired operating point indicates optimal values for the one or more input parameters and the one or more output parameters required for the efficient operation of the industrial plant. For example, the desired operating point for the data center may be to maintain the temperature of the data center at 18 degrees Celsius for varying computational loads of the one or more process equipment's without increasing the humidity beyond 60%.

In one embodiment, a control unit (103) and a computing system (102) may be communicatively coupled to the industrial process (101) via a communication network (not shown in the figure). The communication network may include, for example, a direct connection, an enterprise network, a Peer to Peer (P2P) network, a Local Area Network (LAN), a Wide Area Network (WAN), wireless network (e.g., using Wireless Application Protocol (WAP)), the Internet, Wireless Fidelity (Wi-Fi), cellular network, and the like having a wired or a wireless interface. The computing system (102) may include at least one central processing unit ("CPU" or "processor") (102A). The at least one processor (102A) may include specialized processing units such as integrated system (bus) controllers, memory management control units, floating-point units, graphics processing units, digital signal processing units, and the like. The at least one processor (102A) may be disposed in communication with the one or more process equipment's of the industrial process (101) and the control unit (103) via I/O interface (not shown in Figure). Further, the computing system (102) may include a memory (102B) communicatively coupled with the at least one processor (102A). The memory (102B) may store a collection of program or database components, including, without limitation, user interface, an operating system, web server, and the like. In an embodiment, the computing system (102) may be a desktop computer, a remote server, and the like.

The computing system (102) obtains the plurality of input values and the corresponding plurality of output values associated with the one or more input parameters and the one or more output parameters, respectively. In a first example, the plurality of the input values may include say 100 temperature values associated with the one or more input parameters such as the temperature of air provided by the air conditioning unit and the corresponding plurality of output values may include 100 temperature values associated with the data center. In a second example, the plurality of the input values may include say 74 values associated with the one or more input parameters such as the quantity of airflow provided by the air conditioning unit and the corresponding plurality of output values may include 74 temperature values associated with the data center.

Further, the computing system (102) may perform at least one of identifying a pre-existing linear model, increasing a range of operation values associated with the pre-existing linear model, determining one or more new linear models (107), and adapting a current pre-existing linear model for one or more input values from the plurality of input values. In a first example, from the plurality of input values (say 100 values), for one or more input values say 28 values a pre-existing linear model (say model -1 and model-6) may be identified, for 32 values one or more new linear models (107) (say model -2) may be determined and for 40 values the range of operation values associated with the pre-existing linear model may be increased. In a second example, from the plurality of input values (say 100 values), for one or more input values say 60 values one or more new linear models (107) (say 5) may be determined, for 25 values the current pre-existing linear model (say model-3) may be adapted using the 25 values, and for 15 values the pre-existing linear model (say model -4) may be identified.

In an embodiment, for the one or more input values, the computing system (102) may identify the pre-existing linear model from one or more pre-existing linear models (106) based on a decision tree. For example, the one or more pre-existing linear models (106) indicate linear models (107) determined by the computing system (102) for the plurality of input values and the output values received at a previous instant in time (such as 1 hour before the current time, 2 days before the current time and the like). In an exemplary embodiment, the one or more pre-existing linear models (106) are represented using the decision tree, where the decision tree includes a plurality of nodes comprising one or more decision nodes and one or more end nodes arranged in a tree-like structure. The decision nodes include an evaluating condition for deciding the path to be traversed in the tree-like structure and the end nodes include the one or more pre-existing linear models (106). The computing system (102) based on the evaluating condition in the decision nodes identifies the pre-existing linear model for one or more input values. For example, the evaluating condition may include a pre-determined rule based on the plurality of input values obtained at a previous instant in time and the evaluating condition may include a range of operation values for the one or more pre-existing linear models (106). The range of operation values indicate a maximum input value and a minimum input value for which the pre-existing model may be used to determine the one or more predicted values to operate the industrial process (101). Further, the computing system (102) identifies the pre-existing linear model from the decision tree when the pre-existing linear model is capable of determining one or more predicted output values for the one or more input values within a predefined error value. The predefined error value is indicative of a difference between the one or more predicted output values from the pre-existing model and the one or more output values obtained by the computing system (102). For example, the predefined error value may be represented using percentages such as 1%, 5%, and the like, using numbers such as 10.5, 5.7, and the like. Consider, for one or more input values, the pre-existing linear model (say model - 2) determines the one or more predicted output values such as 7.3, 8.4, and the like. If the one or more output values obtained is 7.1, 8.5, and the like and the pre-defined error value is 0.5, then the computing system (102) determines the difference between the one or more predicted output values such as 7.3, 8.4 and the one or more output values such as 7.1, 8.5 is within the pre-defined error value of 0.5. Further, the computing system (102) identifies the pre-existing linear model (say model - 2) for using the one or more predicted values to operate the industrial process (101) when the one or more input values are in the range of operation associated with the pre-existing linear model.

In an embodiment, the computing system (102), for the one or more input values, may increase the range of operation values associated with the pre-existing linear model to encompass the one or more input values from the plurality of input values, when the one or more predicted output values for the one or more input values determined by the pre-existing linear model to be within the predefined error value. For example, the computing system (102) identifies the pre-existing linear model (say model -5) based on the decision tree, capable of determining the one or more predicted output values for the one or more input values within the predefined error value. But the pre-existing linear model (say model -5) has the operating range from 63.8 to 82.9 corresponding to one or more input parameters and the one or more input values is in the range of 324 to 359. Then, the computing system (102) increases the range of operation to include both [63.8 to 82.9 and 324 to 359].

In an embodiment, for the one or more input values, the computing system (102) may determine the one or more new linear models (107) based on a linear regression technique. The linear regression technique determines the linear relationship between the one or more input parameters and the one or more output parameters using the one or more input values and the corresponding one or more output values. For example, the linear regression technique may determine a plurality of regression coefficients indicative of the linear relationship between the one or more input values and the one or more output values using at least one of a statistical technique such as matrix theory, an Artificial Intelligence (AI) based techniques and the like. The plurality of the regression coefficients represents a new linear model from the one or more linear models (107). For example, to model the relationship between the one or more input values and the one or more output values, the computing system (102) may determine 1 new linear model, 2 new linear models , 3 new linear models , and the like using the one or more input values and the one or more output values. The computing system (102) determines the one or more new linear models (107) when each of the one or more pre-existing linear models (106) fail to determine the one or more predicted output values for the one or more input values within the predefined error value and the one or more input values are outside the range of operation. For example, if there are 10 pre-existing linear models and all the 10 pre-existing models do not determine the one or more predicted output values for the one or more inputs values within the predefined error value. In addition, if the range of operation associated with each of the 10 pre-existing linear models do not include the one or more input values (say the range of operation of all the 10 pre-existing models cover the values from -200 to +456, but the one or more input values are in the range of -328 to -417), then the computing system (102) may determine the one or more linear models (107) for the one or more input values (i.e. -328 to -417) by categorizing the one or more input values into one or more groups. Further, the one or more new linear models (107) are included in the decision tree.

In an embodiment, for the one or more input values, the computing system (102) may adapt a current pre-existing linear model from the one or more pre-existing linear models (106) used to determine the one or more predicted output values using the plurality of input values based on the linear regression technique. In one embodiment, adapting the current pre-existing linear model includes modifying the plurality of regression coefficients associated with the current pre-existing linear model using the one or more input values and the corresponding one or more output values based on the linear regression technique. The computing system (102) adapts the current pre-existing linear model when the current pre-existing linear model fails to determine the one or more predicted output values for the one or more input values within the predefined error value and each of the one or more input values are inside the range of operation. For example, if the computing system (102) determines the current pre-existing linear model (say model -1) for determining the one or more predicted output values corresponding to the one or more input values based on the decision tree. In addition, the one or more input values (say 146, 152, 178, and the like) are within the range of operation values (say 130 to 200) associated with the current pre-existing linear model (say model -1). But the current pre-existing linear model (say model -1) fails to determine the one or more predicted output values corresponding to the one or more input values within the predefined error value (say 10%). Then, the computing system (102) adapts the plurality of the regression coefficients indicative of the current pre-existing model. After, adapting the current pre-existing linear model, the current pre-existing linear model determines the one or more predicted output values for the corresponding one or more input values within the pre-defined error value. For example, the one or more pre-existing linear models (106) and the one or more new linear models (107) for the plurality of input values corresponding to the data center is as shown in **FIGURE 1D.**

In an embodiment, the computing system (102) provides at least one of the one or more pre-existing linear models (106), the one or more new linear models (107), and the decision tree to the control unit (103) associated with the industrial process (101). For example, the computing system (102) may provide at least one of the one or more pre-existing linear models (106), the one or more new linear models (107), and the decision tree to the control unit (103) periodically such as every 2 hours, 10 hours, 2 days, 5 days and the like. In one embodiment, the control unit (103) may be an Model Predictive Control (MPC) based controller. Further, the control unit (103), in real-time, operates the industrial process (101) at the desired operating condition using the at least one of the one or more pre-existing linear models (106) and the one or more new linear models (107). In one embodiment, the control unit (103) may obtain the plurality of input values corresponding to the one or more input parameters, in real-time, at each sampling interval such as 10 seconds, 30 seconds, 1 minute, and the like. Further, the control unit (103) may determine the one or more predicted output values corresponding to the one or more input values using the at least one of the one or more pre-existing linear models (106) and the one or more new linear models (107) based on the decision tree. Furthermore, the one or more predicted output values may be used to modify the one or more input parameters of the industrial process (101) enabling the operation of the industrial process (101) at the desired operating point. For example, if the one or more input values from the data center indicate the quantity of airflow as 350 cubic feet per minute (CFM) and temperature of the air as 18 degrees Celsius, but the temperature in the data center is 19 degrees and the desired operating point in the data center is 18 degrees Celsius, then the control unit (103) may determine the one or more predicted output values to modify the quantity of airflow from 350 CFM to 400 CFM using at least one of the one or more pre-existing linear models (106) and the one or more new linear models (107) based on the decision tree. Thereafter, the one or more predicted output values may be used to modify the quantity of the airflow provided by the air conditioning unit to operate the data center at the desired operating point of 18 degrees Celsius.

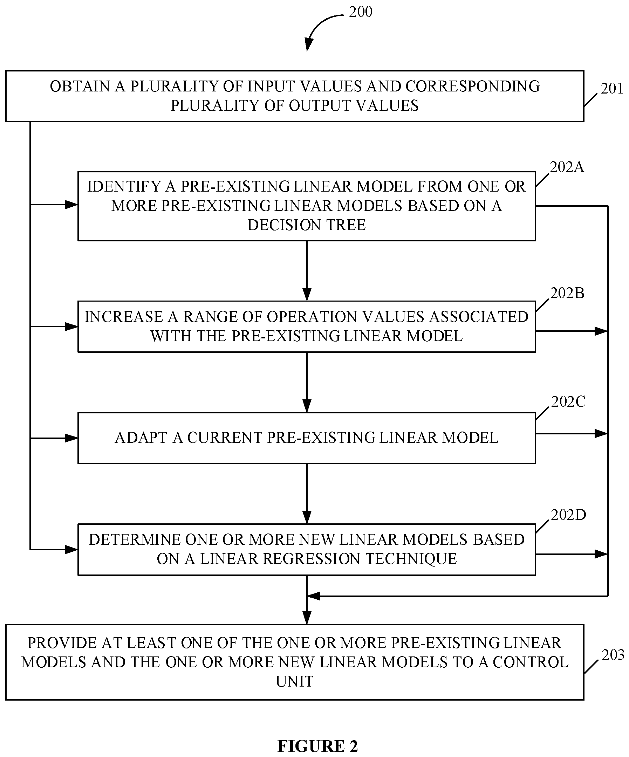

Figure 2 illustrates an exemplary flow chart for operating an industrial process (101) at a desired operating condition.

At the step 201, the computing system (102) obtains the plurality of input values and the corresponding plurality of output values associated with the one or more input parameters and the one or more output parameters, respectively.

In an embodiment, the one or more input parameters and the one or more output parameters of the industrial process (101) may be associated with the one or more equipment's of the industrial process (101). For example, if the industrial process (101) includes a mixer as the one or more equipment's, then the quantity of a plurality of materials or fluids flowing through the mixer denotes the one or more input parameters and the quantity of the material or fluid output by the mixer after mixing the plurality of materials or fluids denotes the one or more output parameters.

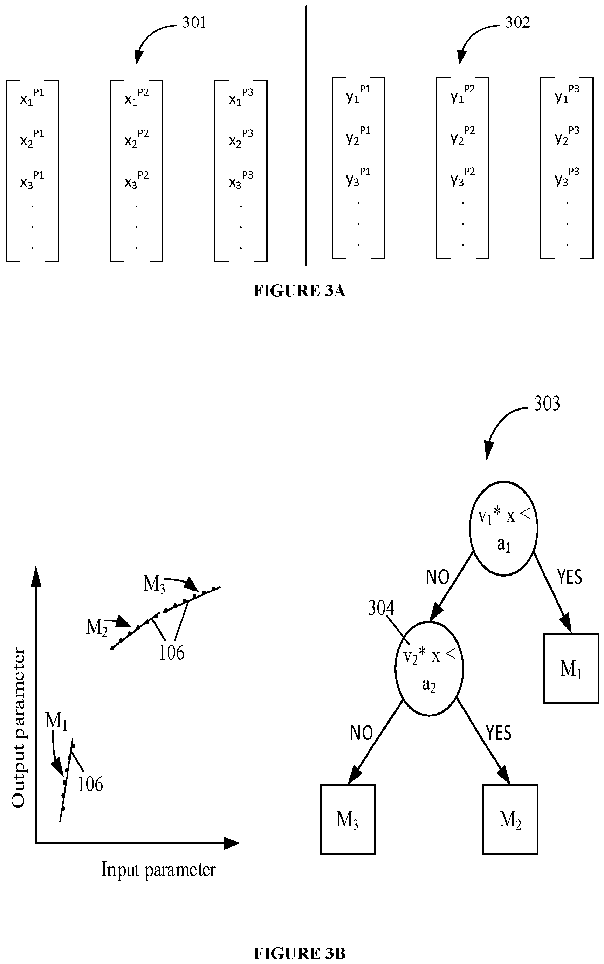

For example, the plurality of input values (301) and the corresponding plurality of output values (302) associated with the one or more input parameters and the one or more output parameters respectively is as shown in **FIGURE 3A.** Where P1, P2, and P3 denote the one or more input parameters and the one or more output parameters, $x_1$, $x_2$, and the like denote the plurality of the input values corresponding to the one or more input parameters, and $y_1$, $y_2$, and the like denote the plurality of the output values corresponding to the one or more output parameters.

In one embodiment, obtaining the plurality of input values (301) and the corresponding plurality of output values (302) comprises receiving the plurality of input values (301) and the corresponding plurality of output values (302) from one or more sensors associated with the industrial process (101). For example, the one or more sensors may include the temperature sensor, the humidity sensor, the flowmeter, a timer, and the like. The one or more sensors specified herein should not be considered as a limitation and the person skilled in the art appreciates the use of various sensors to measure the plurality of input values (301) and the corresponding plurality of output parameters .

In another embodiment, obtaining the plurality of input values (301) and the corresponding plurality of output values (302) comprises retrieving the plurality of input values (301) and the corresponding plurality of output values (302) from a database associated with the computing system (102). For example, the plurality of input values (301) and the corresponding plurality of output values (302) may be stored in a database and the computing system (102) retrieves the plurality of input values (301) and the corresponding plurality of output values (302) periodically such as 1 hour, 5 hours, 2 days, and the like.

At the step 202, the computing system (102) performs for one or more input values from the plurality of input values (301), at least one of the operations detailed in the steps 202A, 202B, 202C, and 202D.

In an embodiment, the one or more input values from the plurality of the input values may be selected based on the statistical techniques such as mean, standard deviation, and the like or using one or more clustering techniques. The person skilled in the art appreciates the use of other techniques to select the one or more input values from the plurality of input values (301) based on the nearness or closeness of values in the plurality of the input values. For example, the plurality of input values (301) (say 100) may be categorized into 6 groups of one or more input values say (group-1 = 15 input values, group-2 = 25 input values, group-3 = 10 input values, group-4 = 30 input values, group-5 = 7 input values, and group-6 = 13 input values).

At the step 202A, the computing system (102) identifies the pre-existing linear model from the one or more pre-existing linear models (106) based on the decision tree such that the pre-existing linear model is capable of determining that the one or more predicted output values for the one or more input values is within the predefined error value.

In an embodiment, identifying the pre-existing linear model comprises selecting the pre-existing linear model for the one or more input values from the plurality of input values (301) based on an evaluating condition associated with each node of the plurality of nodes in the decision tree. The decision tree comprises the plurality of nodes arranged in the tree-like structure. The plurality of the nodes comprises one or more decision nodes and one or more end nodes. The one or more decision nodes include the evaluating condition and based on the evaluating condition the subsequent node to be traversed in the decision tree is indicated. The one or more end nodes comprise one of the pre-existing linear model from the one or more pre-existing linear models (106). For example, the decision tree (303) and the corresponding one or more pre-existing linear models (106) are as shown in **FIGURE 3B**. The decision tree (303) comprises 2 decision nodes and 3 end nodes which are used to select the pre-existing linear model for the one or more input values based on an evaluating condition (304). The 3 pre-existing linear models are denoted as $M_1$, $M_2$, and $M_3$ in the 3 end nodes. Further, the evaluating condition (304) to select the pre-existing linear model is denoted in the 2 decision nodes. For example, consider the evaluating condition (304) $v_1 * x \leq a_1$, where x denotes the one or more input values from the plurality of input values (301), $v_1$ and $a_1$ are computed using the below equations

$$v_1 = M_1 - M_3 \quad \dots\dots\dots\dots\dots\dots\dots\dots\dots\dots\dots\dots\dots\dots\dots\dots\dots\dots\dots\dots \quad (1)$$

$$a_1 = v_1^T \left( (M_1 + M_3) / 2 \right) \dots\dots\dots\dots\dots\dots\dots\dots\dots\dots\dots\dots\dots\dots\dots\dots \quad (2)$$

where $M_1$ and $M_3$ denote at least one of the regression coefficients of model-1 and model-3 respectively, the range of operation values associated with model-1 and model-3, respectively. The person skilled in the art appreciates the use of various evaluating conditions in the one or more decision nodes of the decision tree (303). Further, when the evaluating condition (304) specified in the one or more decision nodes is true, the computing system (102) traverses to the subsequent node in the decision tree (303) indicated by the text "YES". Alternatively, when the evaluating condition (304) specified in the one or more decision nodes is false, the computing system (102) traverses to the subsequent node in the decision tree (303) indicated by the text "NO". The pre-existing model (106) selected using the decision tree (303) is used to determine the one or more predicted output values for the one or more input values within the predefined error value. For example, the predefined error value may be 5%, 10%, and the like or 0.2, 7.4, and the like.

After selecting the pre-existing model for the one or more input values, the computing system (102) compares the range of operation values associated with the pre-existing linear model with the one or more input values. The range of operation values indicates a maximum input value and a minimum input value for which the pre-existing model may be used to determine the one or more predicted values to operate the industrial process (101). Based on a result of the comparison, when the range of operation values associated with the pre-existing model encompasses all of the one or more input values, the computing system (102) identifies the pre-existing linear model to determine the one or more predicted output values. Further, the step 202A may be performed for the plurality of the input values and if all the plurality of the input values is identified using the pre-existing model, the computing system (102) performs the step 203.

Alternatively, when the range of operation values does not encompass (or excludes) the one or more input values, the computing system (102) increases the range of operation values associated with the pre-existing linear model as detailed in the step 202B.

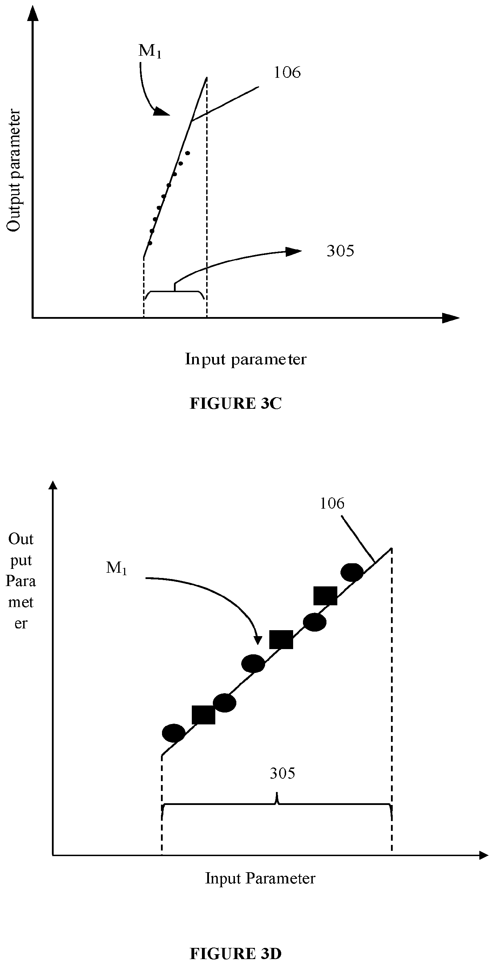

For example, the pre-existing linear model ($M_1$) corresponding to one or more input values received at the previous instant in time is as shown in **FIGURE 3C**. Further, the pre-existing linear model ($M_1$) is identified for the one or more input values (denoted by a square box) obtained at the present instant in time because the range of operation values (305) encompasses all of the one or more input values as shown in **FIGURE 3D** and the one or more predicted output values corresponding to the one or more input values within the range of operation values (305) are within the predefined error value. In another example, let X denote a vector comprising one or more input values associated with one or more input parameters, Y denote a vector comprising the one or more output values associated with the one or more output parameters, A denote a matrix comprising the regression coefficients of the pre-existing model, Y' denote a vector comprising the one or more predicted output values corresponding to the one or more input values using the pre-existing model, then the equation below:

$$Y' = A*X \dots\dots\dots\dots\dots\dots\dots\dots\dots\dots\dots\dots\dots\dots\dots\dots\dots\dots\dots\dots\dots\dots\dots \quad (3)$$

denotes the linear model corresponding to the pre-existing model, and

$$\varepsilon' = Y - Y' \dots\dots\dots\dots\dots\dots\dots\dots\dots\dots\dots\dots\dots\dots\dots\dots\dots\dots\dots\dots\dots\dots \quad (4)$$

denotes a prediction error.

In an embodiment, when the computing system (102) identifies the pre-existing linear model for the one or more input values, the prediction error ($\varepsilon'$) is within the predefined error value (denoted as $\varepsilon$) and the one or more input values are within the range of operation values (305) associated with the pre-existing linear model.

At the step 202B, the computing system (102) increases the range of operation values (305) associated with the pre-existing linear model to encompass the one or more input values from the plurality of input values (301), when the one or more predicted output values for the one or more input values determined by the pre-existing linear model to be within the predefined error value.

In an embodiment, the computing system (102) determines a prediction error value associated with the pre-existing linear model based on the one or more predicted output values corresponding to the one or more input values and the one or more output values using the equation (4). The prediction error value is indicative of a deviation between the one or more output values and the one or more predicted output values corresponding to the one or more input values. Further, when the prediction error ($\varepsilon'$) is within the predefined error value (denoted as $\varepsilon$) but the range of operation values (305) associated with the pre-existing model does not encompass (or excludes) the one or more input values, the computing system (102) increases the range of operation values (305) associated with the pre-existing linear model.

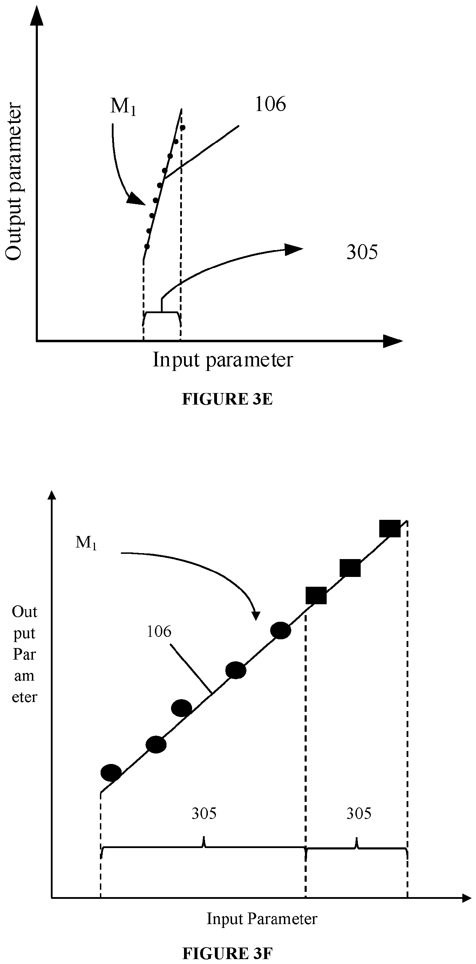

For increasing the range of operation values (305), the computing system (102) compares the prediction error value with the predefined error value associated with the pre-existing linear model. For example, if the one or more input values comprises 15 values, the computing system (102) may determine the prediction error value for each of the one or more input values. Further, the computing system (102) compares the prediction error value of the 15 values with the predefined error value associated with the pre-existing linear model. Based on the result of the comparison, the computing system (102) increases the range of operation values (305) associated with the pre-existing linear model to encompass the one or more input values, when the prediction error value is lesser than the predefined error value. For example, if the prediction error value of the 15 values is lesser than the predefined error value, then the computing system (102) increases the range of operation values (305) to include all the 15 of the one or more input values. In another example, the pre-existing linear model with the range of operation values (305) is as shown in **FIGURE 3E,** and an increased range of operation values (305) for the pre-existing liner model when the prediction error value is lesser than the predefined error value for the one or more input values is as shown in **FIGURE 3F.**

Alternatively, when the prediction error value is greater than the predefined error value and the one or more input values are inside the range of operation, the computing system (102) adapts the pre-existing linear model as detailed in step 202C.

At the end of step 202B, if for all the plurality of input values (301), the pre-existing model has been identified using the decision tree (303), or by increasing the range of operation values (305), the computing system (102) performs the step 203.

At the step 202C, the computing system (102) adapts the current pre-existing linear model from the one or more pre-existing linear models (106) used to determine the one or more predicted output values using the one or more input values based on the linear regression technique, when the current pre-existing linear model fails to determine that the one or more predicted output values for the one or more input values are within the predefined error value and each of the one or more input values are inside the range of operation.

In an embodiment, for the one or more input values within the range of operation, when the current pre-existing linear model fails to determine the one or more predicted output values within the predefined error value, the computing system (102) adapts the current pre-existing linear model. After, the adaptation, the current pre-existing linear model determines the one or more predicted output values within the predefined error value.

In an embodiment, for adapting the current pre-existing linear model, the computing system (102) modifies one or more parameters associated with the current pre-existing linear model using the one or more input values and the corresponding one or more output values based on the linear regression technique. The one or more parameters herein are referred to as a subset of the plurality of regression coefficients and the terms parameters and regression coefficients may be used interchangeably in the present disclosure. The linear regression technique modifies the one or more parameters associated with the current pre-existing model based on the one or more input values and the corresponding one or more output values.

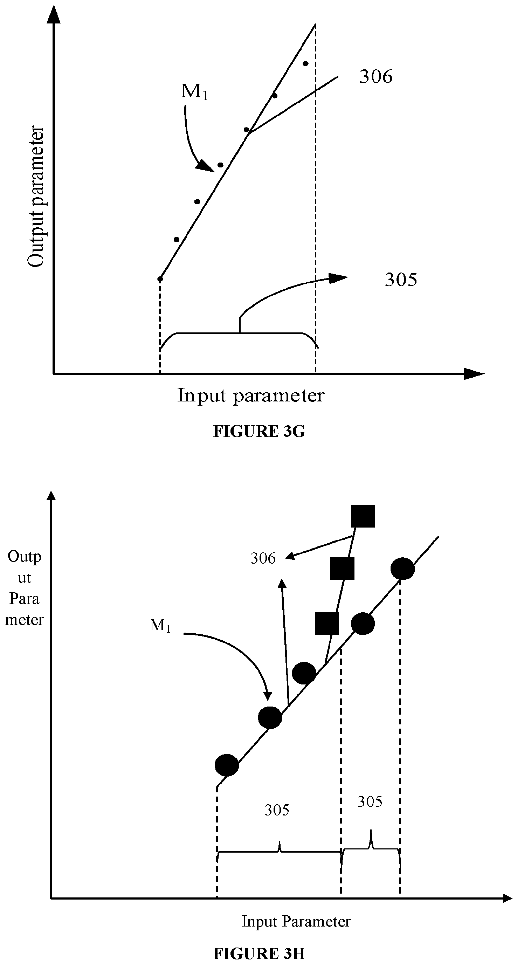

For example, the current pre-existing linear model (306) identified for the plurality of input values (301) obtained at the previous time instants is as shown in **FIGURE 3G.** Further, the current pre-existing linear model (306) adapted for the one or more input values (denoted by the square boxes) obtained at the current instant in time using the linear regression technique is as shown in **FIGURE 3H.** The adapted current pre-existing linear model (306) determines the one or more predicted outputs within the predefined error value corresponding to the one or more input values within the range of operation values (305).

In an embodiment, when the steps 202A, 202B, and 202C cannot be performed on the one or more input values, the computing system (102) performs the step 202D. For example, for the one or more input values, if none of the pre-existing models can be identified using the decision tree (303) or by increasing the range of operation values (305) or by adapting the current pre-existing linear model (306), the computing system (102) performs the step 202D.

At the step 202D, the computing system (102) determines the one or more new linear models (107) based on the linear regression technique, when each of the one or more pre-existing linear models (106) fail to determine that the one or more predicted output values for the one or more input values are within the predefined error value and the one or more input values are outside the range of operation.

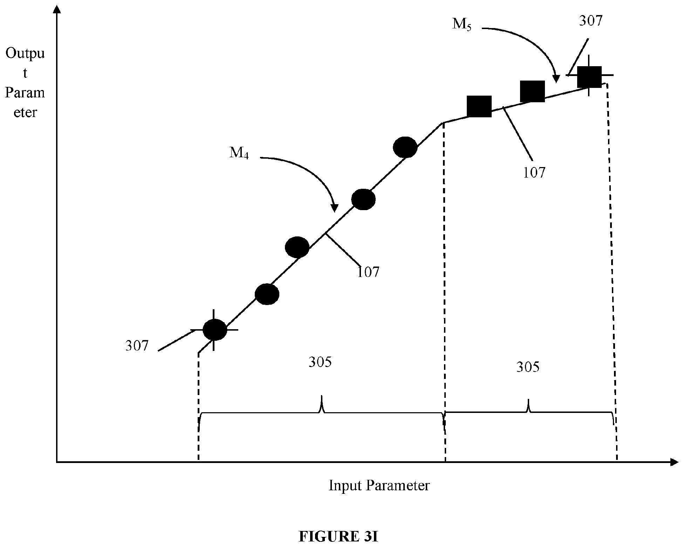

In an embodiment, the computing system (102) determines the one or more new linear models (107) by selecting one or more reference values (307) as shown in **FIGURE 3I,** for the one or more input values and the corresponding one or more output values from the plurality of input values (301) and the corresponding plurality of output values (302) respectively. For example, the one or more reference values (307) may be selected randomly or as a mean of the one or more input values and the like. In addition, a count of the one or more reference values (307) is equal to the count of the one or more new linear models (107) to be determined. Further, the computing system (102) determines the one or more parameters (i.e. plurality of regression coefficients) associated with each of the one or more new linear models (107) using the one or more reference values (307), the one or more input values, and the one or more output values based on the linear regression technique as shown in **FIGURE 3I**. The person skilled in the art appreciates the use of at least one of a statistical technique such as matrix theory, an Artificial Intelligence (AI) based techniques, and the like for determining the one or more parameters using the linear regression technique. Furthermore, the computing system (102) computes the range of operation values (305) for each of the one or more new linear models (107) based on at least one of the one or more parameters, the one or more reference values (307), the one or more input values, the one or more output values, the one or more predicted output values and the predefined error value as shown in **FIGURE 3I.** The range of operation values (305) associated with a linear model is indicative of a boundary for the plurality of input values (301), wherein, for the one or more input values within the boundary, the linear model generates the one or more predicted output values with the predicted error values lesser than the predefined error value. For example, the range of operation values (305) may include a maximum value and a minimum value associated with the one or more input values. For example, the region of operation values may be determined using the below equation:

$$\mathcal{E}^T * \mathcal{E} = X^T * A^T * A * X \dots\dots\dots\dots\dots\dots\dots\dots\dots\dots\dots\dots\dots\dots\dots\dots\dots\dots\dots\dots\dots (5)$$

At the step 203, the computing system (102) provides at least one of the one or more pre-existing linear models (106) and the one or more new linear models (107) to the control unit (103) associated with the industrial process (101), wherein the control unit (103) operates the industrial process (101) at the desired operating condition, in real-time, using the at least one of the one or more pre-existing linear models (106) and the one or more new linear models (107).

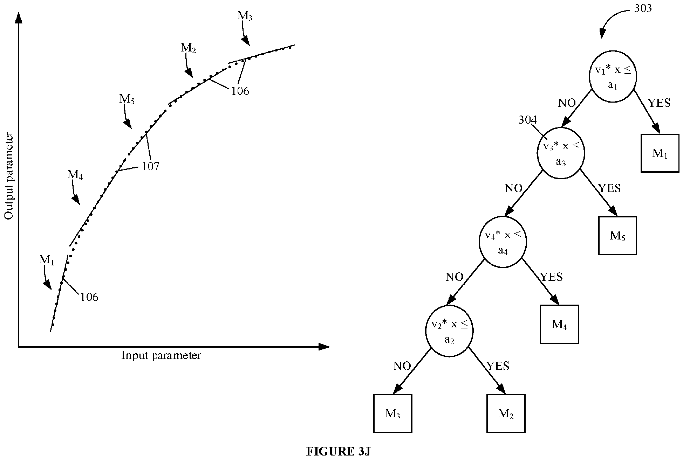

In an embodiment, the computing system (102) may periodically (such as 15 minutes, 2 hours, 1 day, 5 days, and the like) provide the at least one of the one or more pre-existing linear models (106) and the one or more new linear models (107) to the control unit (103). For example, at least one of the one or more pre-existing linear models (106), the one or more new linear models (107) and the corresponding decision tree (303) provided to the control unit (103) is as shown in **FIGURE 3J.**

In an embodiment, the control unit (103), in real-time, receives the one or more input values and the one or more output values from the industrial process (101). The control unit (103) is configured to identify the at least one optimized model from the at least one of the one or more pre-existing linear models (106) and the one or more new linear models (107) for the one or more input values. The control unit is configured to determine an optimized model for operating the industrial process (101) under the given constraints. In a first example, the control unit (103) is configured to determine an optimized model from the decision tree (303) comprising 100 models, to operate the data center at 18 degrees Celsius given the constraint to maintain the humidity within 60%. For the one or more input values, the decision tree (303) may indicate a plurality of linear models, so finding at least one optimized model from the plurality of linear models may be time consuming and computationally inefficient. In an embodiment, the control unit (103) selects, in the real-time, a subset of models from the plurality of linear models comprising the one or more pre-existing linear models (106) and the one or more new linear models (107) in the decision tree (303) for the one or more input values based on a present operating condition of the industrial process (101) and the predefined error value. The subset of models may include one or more linear models closer to the present operating condition and having the prediction error values within the predefined error value for the one or more input values. For example, from the 100 models in the decision tree (303), the control unit (103) may select 8 models indicative of the subset of models based on the present operating condition of the industrial process (101) and the predefined error value.

Further, the control unit (103), determines, in real-time, the one or more predicted output values for one or more future time instants using each model from the subset of models. For example, the one or more predicted output values for one or more future time instants (say 1-time instants) using 2 models indicative of the subset of models is as shown below:

$$y'_{k+1} = [C_1 * A_1 \quad C_2 * A_2] * \begin{bmatrix} z_{k+1}^1 \\ z_{k+1}^2 \end{bmatrix} + [C_1 * B_1 \quad C_2 * B_2] * \begin{bmatrix} S_{k+1}^1 \\ S_{k+1}^2 \end{bmatrix} \quad\text{.........................................} \quad (9)$$

where $A_1$, $B_1$, *and* $C_1$ denote the one or more parameters of model-1, $A_2$, $B_2$, *and* $C_2$ denote the one or more parameters of model-2, $y'_{k+1}$ denotes the one or more predicted output values using the model-1 and the model-2,

$z_{k+1}^i = I_{k+1}^i * x_k$ and $S_{k+1}^i = I_{k+1}^i * u_k$, $x_k$ and $u_k$ denote the one or more input values, $I_{k+1}^i$ denotes the a binary value of "0" or "1" associated with the model-i at the time instant "k+1".

Furthermore, the control unit (103) identifies, in real-time, at least one optimized model from the subset of models based the one or more predicted output values, wherein the at least one optimized model is used to modify the plurality of input values (301) associated with the one or more input parameters for operating the industrial process (101) at the desired operating condition. The modified evaluation condition for identifying one of the 2 models is given below:

$$v_1 * \begin{bmatrix} z_{k+1}^1 \\ S_{k+1}^1 \end{bmatrix} \leq a_1 * I_{k+1}^1$$

for identifying the model-1 as the optimized linear model from the subset of models;

$$v_1 * \begin{bmatrix} z_{k+1}^2 \\ S_{k+1}^2 \end{bmatrix} \geq a_1 * I_{k+1}^2$$

for identifying the model-2 as the optimized linear model from the subset of models.

In an embodiment, the control unit (103) determines the one or more predicted output values using the at least one optimized model and provides commands to the one or more process equipment's for modifying the one or more input values associated with the one or more input parameters. Further, the modification of the modifying the one or more input values associated with the one or more input parameters modifies the one or more output values associated with the one or more output parameters of the industrial process (101). The modification of the one or more output values associated with the one or more output parameters enables the operation of the industrial process (101) at the desired operating point.

The method for operating the industrial process (101) at the desired operating point models the non-linear relationship between the one or more input parameters and the one or more output parameters using a plurality of linear models (107) by dividing the plurality of input values (301) into one or more smaller groups of values and determining a linear model for each of the smaller groups of values using linear regression technique. The plurality of linear models (107) is represented using a decision tree (303) enabling the control to identify the linear model corresponding to the one or more input values with lesser computations and in lesser time duration. Further, the non-linear behavior (105) of the industrial process (101) changes due to a failure of the one or more process equipment's or due to aging of the one or more process equipment's, the computing system (102) adapts the pre-existing linear models (106). The addition of new linear models (107) is easier and accurate due to the decision tree (303) representation of the one or more linear models (107). The linear models (107) are determined dynamically as and when the industrial process (101) generates the plurality of the input values. Therefore, eliminating the need for a complete set of input values to determine the non-linear behavior (105) of the industrial process (101). Further, identification of the at least one optimized model using the decision tree (303) for operating the industrial process (101) in real-time is achieved using the modified evaluation condition. The optimization of identifying the at least one optimized model for the given constraints is achieved with lesser computational resources and lesser time because of the modified evaluation condition. The selection of the subset of models and the modified evaluation condition enables the real-time operation of the industrial process (101) and maximizes the efficient of the one or more process equipment's of the industrial process (101).

This written description uses examples to describe the subject matter herein, including the best mode, and also to enable any person skilled in the art to make and use the subject matter. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Referral Numerals:**

101 - industrial process
102 - computing system
102A - Processor
102B - Memory
103 - control unit
104 - air conditioning units
105 - non-linear behavior
106 - one or more pre-existing linear models
107 - New Linear model
301 - Plurality of input values
302 - Plurality of output values
303 - decision tree
304 - evaluating condition;
305 - Range of operation values
306 - Current pre-existing linear model and
307 - Reference values.

**Claims**

1. A method of operating an industrial process (101) at a desired operating condition, wherein the industrial process (101) includes one or more input parameters having a non-linear and a time-varying relationship with corresponding one or more output parameters, wherein the one or more input parameters and the corresponding one or more output parameters are associated with one or more process equipment's of the industrial process (101), the method comprising:

obtaining, by a computing system (102), a plurality of input values (301) and a corresponding plurality of output values (302) associated with the one or more input parameters and the one or more output parameters respectively;
performing, by the computing system (102), for one or more input values from the plurality of input values (301), at least one of:

identifying a pre-existing linear model from one or more pre-existing linear models (106) based on a decision tree (303) such that the pre-existing linear model is capable of determining that one or more predicted output values for the one or more input values is within a predefined error value; or
increasing a range of operation values (305) associated with the pre-existing linear model to encompass the one or more input values from the plurality of input values (301), when the one or more predicted output values for the one or more input values determined by the pre-existing linear model to be within the predefined error value; or
adapting a current pre-existing linear model (306) from the one or more pre-existing linear models (106) used to determine the one or more predicted output values using the one or more input values based on a linear regression technique, when the current pre-existing linear model (306) fails to determine that the one or more predicted output values for the one or more input values are within the predefined error value and each of the one or more input values are inside the range of operation; or
determining one or more new linear models (107) based on the linear regression technique, when each of the one or more pre-existing linear models (106) fail to determine that the one or more predicted output values for the one or more input values are within the predefined error value and the one or more input values are outside the range of operation; and

providing, by the computing system (102), at least one of the one or more pre-existing linear models (106) and the one or more new linear models (107) to a control unit (103) associated with the industrial process (101), wherein the control unit (103) operates the industrial process (101) at the desired operating condition, in real-time, using the at least one of the one or more pre-existing linear models (106) and the one or more new linear models (107).

2. The method as claimed in claim 1, wherein obtaining the plurality of input values (301) and the corresponding plurality of output values (302) comprises at least one of:

   receiving the plurality of input values (301) and the corresponding plurality of output values (302) from one or more sensors associated with the industrial process (101); and
   retrieving the plurality of input values (301) and the corresponding plurality of output values (302) from a database associated with the computing system (102).

3. The method as claimed in any one of the preceding claims, wherein identifying the pre-existing linear model comprises:

   selecting the pre-existing linear model for the one or more input values from the plurality of input values (301) based on an evaluating condition (304) associated with each node of a plurality of nodes in the decision tree (303);
   comparing the range of operation values (305) associated with the pre-existing linear model with the one or more input values; and
   based on a result of the comparison, performing, one of:

   identifying the pre-existing linear model, when the range of operation values (305) encompasses the one or more input values; or
   increasing the range of operation values (305) associated with the pre-existing linear model, when the range of operation values (305) excludes the one or more input values.

4. The method as claimed in any one of the preceding claims, wherein increasing the range of operation values (305) comprises:

   determining a prediction error value associated with the pre-existing linear model based on the one or more predicted output values corresponding to the one or more input values, wherein the prediction error value is indicative of a deviation between the one or more output values and the one or more predicted output values corresponding to the one or more input values;
   comparing the prediction error value with the predefined error value associated with the pre-existing linear model; and
   based on a result of comparison, performing, one of:

   increasing the range of operation values (305) associated with the pre-existing linear model to encompass the one or more input values, when the prediction error value is lesser than the predefined error value; or
   adapting the pre-existing linear model, when the prediction error value is greater than the predefined error value and the one or more input values are inside the range of operation.

5. The method as claimed in any one of the preceding claims, wherein adapting the current pre-existing linear model (306) comprises:
   modifying one or more parameters associated with the current pre-existing linear model (306) using the one or more input values and the corresponding one or more output values based on the linear regression technique.

6. The method as claimed in any one of the preceding claims, wherein determining the one or more new linear models (107) comprises:

   selecting one or more reference values (307) for the one or more input values and the corresponding one or more output values from the plurality of input values (301) and the corresponding plurality of output values (302) respectively;
   determining one or more parameters associated with each of the one or more new linear models (107) using the one or more reference values (307), the one or more input values and the one or more output values based on the linear regression technique; and
   computing the range of operation values (305) for each of the one or more new linear models (107) based on at least one of the one or more parameters, the one or more reference values (307), the one or more input values, the one or more output values, the one or more predicted output values and the predefined error value.

7. The method as claimed in any one of the preceding claims, wherein the range of operation values (305) associated with a linear model is indicative of a boundary for the plurality of input values (301), wherein, for the one or more input values within the boundary, the linear model generates the one or more predicted output values with a predicted error values lesser than the predefined error value.

8. The method as claimed in any one of the preceding claims, wherein operating the industrial process (101) at the desired operating condition, further comprises:

selecting, in real-time, by the control unit (103), a subset of models from the one or more pre-existing linear models (106) and the one or more new linear models (107) for the one or more input values based on a present operating condition of the industrial process (101) and the predefined error value;
determining, in real-time, by the control unit (103), the one or more predicted output values for one or more future time instants using each model from the subset of models; and
identifying, in real-time, by the control unit (103), at least one optimized model from the subset of models based on modified evaluating condition and the decision tree, wherein the at least one optimized model is used to modify the plurality of input values (301) associated with the one or more input parameters for operating the industrial process (101) at the desired operating condition.

9. A computing system (102) for operating an industrial process (101) at a desired operating condition, wherein the industrial process (101) includes one or more input parameters having a non-linear and a time-varying relationship with corresponding one or more output parameters, wherein the one or more input parameters and the corresponding one or more output parameters are associated with one or more process equipment's of the industrial process (101), the computing system (102) comprises:

at least one processor (102A); and
a memory (102B), wherein the memory (102B) is communicatively coupled to the at least one processor (102A), wherein the memory (102B) stores the at least one processor (102A) instructions, which, on execution, causes the at least one processor (102A) to:

obtain a plurality of input values (301) and corresponding plurality of output values (302) associated with the one or more input parameters and the one or more output parameters respectively;
perform, for one or more input values from the plurality of input values (301), at least one of:

identifying a pre-existing linear model from one or more pre-existing linear models (106) based on a decision tree (303) such that the pre-existing linear model is capable of determining that one or more predicted output values for the one or more input values is within a predefined error value; or
increasing a range of operation values (305) associated with the pre-existing linear model to encompass the one or more input values from the plurality of input values (301), when the one or more predicted output values for the one or more input values determined by the pre-existing linear model to be within the predefined error value; or
adapting a current pre-existing linear model (306) from the one or more pre-existing linear models (106) used to determine the one or more predicted output values using the one or more input values based on a linear regression technique, when the current pre-existing linear model (306) fails to determine that the one or more predicted output values for the one or more input values are within the predefined error value and each of the one or more input values are inside the range of operation; or
determining one or more new linear models (107) based on the linear regression technique, when each of the one or more pre-existing linear models (106) fail to determine that the one or more predicted output values for the one or more input values are within the predefined error value and the one or more input values are outside the range of operation; and

providing, by the computing system (102), at least one of the one or more pre-existing linear models (106) and the one or more new linear models (107) to a control unit (103) associated with the industrial process (101), wherein the control unit (103) operates the industrial process (101) at the desired operating condition, in real-time, using the at least one of the one or more pre-existing linear models (106) and the one or more new linear models (107).

10. The computing system (102) as claimed in claim 9, wherein the at least one processor (102A) is configured to obtain the plurality of input values (301) and the corresponding plurality of output values (302) comprises at least one of:

receiving the plurality of input values (301) and the corresponding plurality of output values (302) from one or more sensors associated with the industrial process (101); and

retrieving the plurality of input values (301) and the corresponding plurality of output values (302) from a database associated with the computing system (102).

11. The computing system (102) as claimed in claim 9 or 10, wherein the at least one processor (102A) is configured to identify the pre-existing linear model comprises:

selecting the pre-existing linear model for the one or more input values from the plurality of input values (301) based on an evaluating condition (304) associated with each node of a plurality of nodes in the decision tree (303); comparing the range of operation values (305) associated with the pre-existing linear model with the one or more input values; and

based on a result of comparison, performing, one of:

identifying the pre-existing linear model, when the range of operation values (305) encompasses the one or more input values; or

increasing the range of operation values associated with the pre-existing linear model, when the range of operation values (305) excludes the one or more input values.

12. The computing system (102) as claimed in any one of claims 9 to 11, wherein the at least one processor (102A) is configured to increase the range of operation values (305) comprises:

determining a prediction error value associated with the pre-existing linear model based on the one or more predicted output values corresponding to the one or more input values, wherein the prediction error value is indicative of a deviation between the one or more output values and the one or more predicted output values corresponding to the one or more input values;

comparing the prediction error value with the predefined error value associated with the pre-existing linear model; and

based on a result of the comparison, performing, one of:

increasing the range of operation values (305) associated with the pre-existing linear model to encompass the one or more input values, when the prediction error value is lesser than the predefined error value; or adapting the pre-existing linear model, when the prediction error value is greater than the predefined error value.

13. The computing system (102) as claimed in any one of claims 9 to 12, wherein the at least one processor (102A) is configured to adapt the current pre-existing linear model (306) comprises:
modifying one or more parameters associated with the current pre-existing linear model (306) using the one or more input values and the corresponding one or more output values based on the linear regression technique.

14. The computing system (102) as claimed in any one of claims 9 to 13, wherein the at least one processor (102A) is configured to determine the one or more new linear models (107) comprises:

selecting one or more reference values (307) for the one or more input values and the corresponding one or more output values from the plurality of input values (301) and the corresponding plurality of output values (302) respectively;

determining one or more parameters associated with each of the one or more new linear models (107) using the one or more reference values (307), the one or more input values, and the one or more output values based on the linear regression technique; and

computing the range of operation values (305) for each of the one or more new linear models (107) based on at least one of the one or more parameters, the one or more reference values (307), the one or more input values, the one or more output values, the one or more predicted output values and the predefined error value.

15. A control unit (103) for operating the industrial process (101) at a desired operating condition using at least one of the one or more pre-existing linear models (106) or the one or more new linear models (107) identified by a computing unit associated with the control unit (103), for one or more input values from a plurality of input values (301), using the method as claimed in 1,
wherein, preferably, to operate the industrial process (101) at the desired operating condition, the control unit (103) is configured to:

select, in real-time, a subset of models from the one or more pre-existing linear models (106) and the one or more new linear models (107) for the one or more input values based on a present operating condition of the industrial process (101) and the predefined error value;
determine, in real-time, the one or more predicted output values for one or more future time instants using each model from the subset of models; and
identify, in real-time, at least one optimized model from the subset of models based the one or more predicted output values, wherein the at least one optimized model is used to modify the plurality of input values (301) associated with the one or more input parameters for operating the industrial process (101) at the desired operating condition.

```
┌─────────────────────────────────────────────────────┐
│  ┌──────────────────────┐   ┌──────────────────────┐ │
│  │  PROCESSOR 102A      │   │  MEMORY 102B         │ │
│  └──────────────────────┘   └──────────────────────┘ │
└─────────────────────────────────────────────────────┘
        COMPUTING SYSTEM 102

CONTROL UNIT 103  ◄────►  INDUSTRIAL PROCESS 101
```

**FIGURE 1A**

101

Hot Air

104

Cold Air

104

COMPUTING SYSTEM **102**

CONTROL UNIT **103**

**FIGURE 1B**

**FIGURE 1C**

**FIGURE 1D**

_200_

OBTAIN A PLURALITY OF INPUT VALUES AND CORRESPONDING
PLURALITY OF OUTPUT VALUES — 201

IDENTIFY A PRE-EXISTING LINEAR MODEL FROM ONE OR
MORE PRE-EXISTING LINEAR MODELS BASED ON A
DECISION TREE — 202A

INCREASE A RANGE OF OPERATION VALUES ASSOCIATED
WITH THE PRE-EXISTING LINEAR MODEL — 202B

ADAPT A CURRENT PRE-EXISTING LINEAR MODEL — 202C

DETERMINE ONE OR MORE NEW LINEAR MODELS BASED
ON A LINEAR REGRESSION TECHNIQUE — 202D

PROVIDE AT LEAST ONE OF THE ONE OR MORE PRE-EXISTING LINEAR
MODELS AND THE ONE OR MORE NEW LINEAR MODELS TO A CONTROL
UNIT — 203

**FIGURE 2**

301

$$\begin{bmatrix} x_1^{P1} \\ x_2^{P1} \\ x_3^{P1} \\ \cdot \\ \cdot \\ \cdot \end{bmatrix} \quad \begin{bmatrix} x_1^{P2} \\ x_2^{P2} \\ x_3^{P2} \\ \cdot \\ \cdot \\ \cdot \end{bmatrix} \quad \begin{bmatrix} x_1^{P3} \\ x_2^{P3} \\ x_3^{P3} \\ \cdot \\ \cdot \\ \cdot \end{bmatrix}$$

302

$$\begin{bmatrix} y_1^{P1} \\ y_2^{P1} \\ y_3^{P1} \\ \cdot \\ \cdot \\ \cdot \end{bmatrix} \quad \begin{bmatrix} y_1^{P2} \\ y_2^{P2} \\ y_3^{P2} \\ \cdot \\ \cdot \\ \cdot \end{bmatrix} \quad \begin{bmatrix} y_1^{P3} \\ y_2^{P3} \\ y_3^{P3} \\ \cdot \\ \cdot \\ \cdot \end{bmatrix}$$

**FIGURE 3A**

303

**FIGURE 3B**

FIGURE 3C

FIGURE 3D

**FIGURE 3E**

**FIGURE 3F**

**FIGURE 3G**

**FIGURE 3H**

**FIGURE 3I**

**FIGURE 3J**

Europäisches
Patentamt
European
Patent Office
Office européen
des brevets

# EUROPEAN SEARCH REPORT

Application Number

EP 20 21 7400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/167839 A1 (MILLER JOHN P [US]) 10 July 2008 (2008-07-10) | 1,2, 4-10, 12-15 | INV. G05B17/02 |
| A | * paragraph [0002] * <br> * paragraph [0017] - paragraph [0188]; figures 1-28 * <br> ----- | 3,11 | |
| A | US 2015/379426 A1 (STEELE ROBERT MATTHIAS [US] ET AL) 31 December 2015 (2015-12-31) * paragraph [0174] - paragraph [0196]; figure 33 * <br> ----- | 1,3,11 | |

**TECHNICAL FIELDS SEARCHED (IPC)**

G05B

The present search report has been drawn up for all claims

| Place of search | Date of completion of the search | Examiner |
|---|---|---|
| Munich | 16 June 2021 | Roussel, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 20 21 7400

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-15

    First alternative: identifying a pre-existing linear model

1.1. claims: 4, 12(completely); 1, 2, 7-10, 15(partially)

    Second alternative: increasing a range of operation values

1.2. claims: 5, 13(completely); 1, 2, 7-10, 15(partially)

    Third alternative: adapting a current pre-existing linear model

1.3. claims: 6, 14(completely); 1, 2, 7-10, 15(partially)

    Fourth alternative: determining one or more new linear models

    ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 20 21 7400

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2021

| Patent document cited in search report | Publication date | Patent family member(s) | Publication date |
|---|---|---|---|
| US 2008167839 A1 | 10-07-2008 | US 2008167839 A1<br>WO 2008085705 A1 | 10-07-2008<br>17-07-2008 |
| US 2015379426 A1 | 31-12-2015 | NONE | |

EPO FORM P0459

For more details about this annex : see Official Journal of the European Patent Office, No. 12/82